# EUROPEAN PATENT SPECIFICATION

(11) **EP 1 804 588 B1**
(45) Date of publication and mention of the grant of the patent: **27.04.2011**
(21) Application number: 05851048.8
(22) Date of filing: 20.10.2005
(51) Int. Cl.: A22C 17/08

(54) **DEVICE AND METHOD FOR REMOVING LIQUID FROM A FOOD STRAND**
VORRICHTUNG UND VERFAHREN ZUR ENTFERNUNG DER FLÜSSIGKEIT AUS EINEM LEBENSMITTELPRODUKT
DISPOSITIF ET PROCEDE D'ELIMINATION DE LIQUIDE D'UN CHAPELET D'ALIMENTS

(30) Priority: 22.10.2004 NL 1027318
(43) Date of publication of application: 11.07.2007
(73) Proprietor: Stork Townsend B.V., 5349 AE Oss (NL)
(72) Inventor: REIJERS, Adrianus, Johannes, Maria, NL-5346 TS Oss (NL)
(74) Representative: Van den Heuvel, Henricus Theodorus
(86) International application number: PCT/NL2005/050019
(87) International publication number: WO 2006/062404

(56) References cited:
- DE-A1- 3 320 471
- GB-A- 987 603
- US-A- 3 269 297
- US-A- 5 997 919

## Description

The invention relates to a device for removing liquid from the surface of a food product during displacement of the food product. The invention also relates to a method for removing liquid from the surface of a food product.

In the production and processing of food products, such as for instance an extruded sausage, processes take place wherein the food product is treated with a liquid. Examples of such processes are treating with a coagulation liquid a top layer of a sausage for coagulating, treating a sausage with a liquid smoke, rinsing a food product and so on. In order to prevent a liquid applied in such a process from having an adverse effect, it may be desirable under determined conditions to remove the excess liquid and/or liquid remaining on the surface. A food product can thus for instance be dried more quickly, undesirable substances can be kept off the surface, and it is possible to prevent the liquid having an undesired effect on any subsequent processes, and so on.

The closest prior art document US 3,269,297 discloses an apparatus for providing shaped articles of ground meat and other foodstuffs, ore particularly sausages with edible artificial skin. The apparatus comprises a ground meat extruder, a cut-off device to cut meat into shaped portions, two subsequent conveyor belts cooperating with two liquid applicators for successively applying a sodium alginate or other edible coagulable solution and a calcium chloride solution to the sausage portions. Finally a third perforated conveyor belt carries the coated individual sausages along a blower to direct a blast of air to dry the sausage portions. The quality of drying sausages according this document is moderately; it is inevitable that liquid remainders stay behind with all the drawbacks as previously mentioned.

The present invention therefore has for its object to provide an improved method and device for efficiently removing adhering liquid from a food product without the drawbacks according to the prior art.

The invention provides for this purpose a device for removing liquid from the surface of a food product, according claim 1. So different form the prior art according to the present invention the liquid is blown off a food strand with separate gas flows that are successively followed by a segment with a substantially stationary gas condition to blow the liquid from the strand in phases. Blowing of the liquid of the food product while it is still not portioned in individual sausages has the advantage that the shape of the product enables is easier to dry effectively than in a portioned shape, e.g. the tips of the sausages are hard to dry due to their complex shape and due to the fact that they are difficult to reach by a gas flow however a continuous treatment of a strand by gas flows leads to poor drying results. Probably this is partly due to the "continuous" structure of the strand. The first gas flow comes into contact with the food strand whereby it entrains, or at least blows off, at least a fraction of the moisture adhering to the food strand. In order to obtain the best possible result the food strand is carried successively through a plurality of subsequent gas flows that are followed by a segment with a substantially stationary gas condition thus to create subsequent phases of drying. It is possible here to envisage two or three separate gas flows, but it is also possible to apply tens of gas flows (for instance fifty). An effective result can thus also be achieved by blowing off liquid.

The device can be provided with a common frame for the transport means and the supply means for gas. In respect of the transport means, it is possible to opt for an endless conveyor belt with a drive engaging thereon, or another conveyor such as is already applied for displacing food strands, although it is also possible to displace the food strand over a distance in freely suspended manner, or to give the conveyor a form such that it engages the food strand on only a small surface and thus makes the food strand readily accessible by the gas flows. Another important advantage of the present invention is that it is also possible to remove the liquid from at least a part of the transport means for the food strand (such as a belt or chain).

GB 987,603 discloses an improved method and apparatus for preparing sausages comprising the steps of encasing comminuted meat in a cylinder mould, passing an electric current through the meat to coagulate protein therein and rolling the formed cylindrical sausage while directing thereon a heated gaseous medium to form a skin on the sausage. The cooked sausage can be subjected to a water wash or shower for removing coagulation products. The sausages can be carried through a plurality of compartments or station where they are subjected to successive treatments like skin forming and smoking, washing, drying and chilling. The smoke and air can be delivered through narrow apertures in a plate. There is no disclosure on means nor a method for drying the sausages in this document.

According to U.S. 5,997,919, liquid such as a coagulation liquid can be removed from a food strand by carrying the food strand through an opening in a flexible body. The flexible material must herein engage on the food strand with some resilience so that the liquid is brushed or scraped from the sausage strand. This technique has the advantage that it is possible to remove the liquid adhering to the sausage strand very effectively. A significant drawback of the use of a flexible scraping body is however that a sausage strand can become jammed in the opening in the flexible body. Where there is a constant supply of the strand, this jamming of the strand in the opening can result in great contamination of the equipment, and a considerable loss of product will also occur. The prior art device is also less suitable for processing a food strand with varying cross-sectional dimensions, or it is difficult to process food strands of different dimensions on a device.

In a preferred variant the supply means for gas comprise a number of mutually separated blow openings, which blow openings can for instance be fed in simple manner from a central gas supply. In addition to the function of removing liquid, the supplied gas can also fulfil an extra (conditioning) function depending on the chosen gas composition, such as for instance an antibacterial function. On the other hand it is also possible for the supply means for gas to supply air (blow air) which is supplied under overpressure by for instance a blower or fan.

In a particular preferred embodiment the device is also provided with collecting means for collecting the liquid removed from the food strand by the gas flows. It is thus possible to prevent the liquid removed from the strand contaminating the environment or, depending on the conditions, the liquid can even be re-used. The device can even be expanded such that it is also provided with supply means for liquid which are upstream of the supply means for gas and placed adjacently of the transport route and with which liquid can be brought into contact with the food strand. The whole path of the (liquid) processing of the strand thus takes place in a single device, which increases the control over such a (liquid) processing. If the device is also provided with a housing enclosing the supply means for liquid and the collecting means for the removed liquid, the whole (liquid) processing then takes place within the same housing, which results in a very small chance of disruption of the processes and of contamination of the environment. It is for instance possible here to envisage a highly osmotic liquid in the form of a salt solution (examples hereof are salt solutions such as solutions with DKP, NaCl or other salts) wherein the solution is blown off in the cabinet in which the bath is arranged. The entraining of the solution can thus be countered, which is also advantageous for a treatment with for instance liquid smoke to be performed afterward. The discharge of the adhering liquid moreover enhances the flavour of the food.

Even more additional effects can be obtained if the supply means for gas comprise heating means and/or cooling means. A heating and/or cooling process of the sausage strand can thus take place simultaneously with the removal of the liquid. A further advantage of applying a heating element is that the gases for supplying can be bacterially cleaned therewith (heated above a minimum temperature). Yet another manner of achieving this cleaning effect is by treating the gases for supplying with (UV) radiation.

In an embodiment variant which is easy to realize and manage, the supply means for gas are formed by a hollow transport body for gas which is placed substantially parallel to the transport route and in which a plurality of outlet openings are arranged. Such a body can for instance consist of a pipe or a tube in which placed-apart slots or outlet openings of other form are arranged. The outlet openings can be provided with an adjustable passage opening and/or a nozzle, the outflow direction of which is adjustable. The body can have an optimum length, which partly depends on a number of variables such as the advancing speed of the food strand, of several tens of centimetres, one metre or even a number of metres.

The invention also provides a method for removing liquid from the surface of a food product according claim 8. The advantages of drying the food product in a strand shape in phases by successively moving the food strand through a plurality of gas flows, which gas flows are followed by segments with a substantially stationary gas condition have already been mentioned before and apply likewise for the method according the present invention as they apply for the device according the invention. Particularly favourable results are achieved if the food strand undergoes varying flow conditions while being carried through the gas flows. Such varying flow conditions can be related to one or more of the following variables: speed, temperature, direction, gas composition and turbulence. A simple manner of obtaining varying flow conditions is by carrying the food strand successively through a gas flow and a segment with a substantially stationary gas condition.

When liquid is removed from a sausage strand it is desirable that the flow rate of the gas flow at least at one location amounts to at least 5 metres per second. The food strand is preferably also situated in such a gas flow for 1 - 10 s.

The present invention will be further elucidated on the basis of the non-limitative exemplary embodiments shown in the following figure. Herein:
figure 1 shows a cross-section through a device according to the invention,
figure 2 shows a cross-section through a part of an alternative embodiment variant of the device according to the invention,
figure 3 shows a cross-section through a second embodiment variant of a device according to the invention for wetting and drying a food strand, and
figure 4 shows a perspective view of a nozzle for use in the device according to the invention.

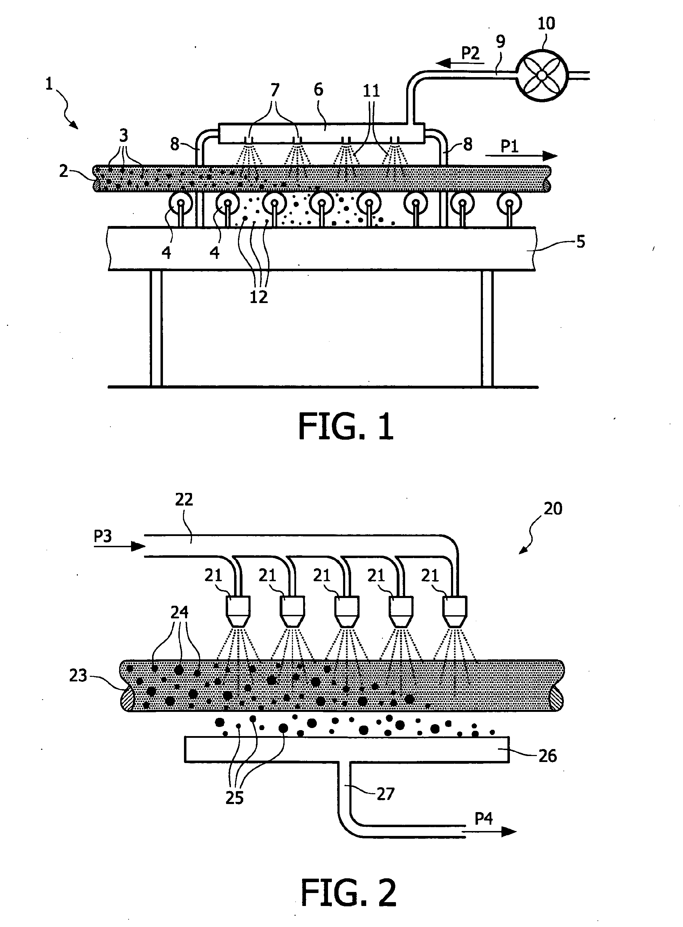

Figure 1 shows a device 1 for removing liquid 3 adhering externally to a sausage strand 2. Sausage strand 2 is advanced by a roller conveyor 4 in a transport direction P1. Roller conveyor 4 is supported by a frame 5. Disposed parallel to sausage strand 2 is a housing 6 in which a number of openings 7 are arranged. Pipe 6 is connected to frame 5 with brackets 8. Connecting onto pipe 6 is a conduit 9 through which air supplied by a fan 10 is blown to the pipe 6 as according to arrow P2. As a result of the supply of air to pipe 6, a number of successive gas flows 11 are created in the direction of transport of sausage strand 2, whereby the liquid 3 is blown from strand 2 in a number of phases and falls downward in the form of drops 12.

Figure 2 shows a part of a device 20 with a number of blow nozzles 21 which are supplied with a gas as according to arrow P3 by a pipe system 22. The liquid 24 adhering to a sausage strand 23 is thus blown off by nozzles 21. The liquid 24 removed from strand 23 falls in the form of drops into a collecting vessel 26 from which the collected liquid is drained as according to arrow P4 through an outlet 27.

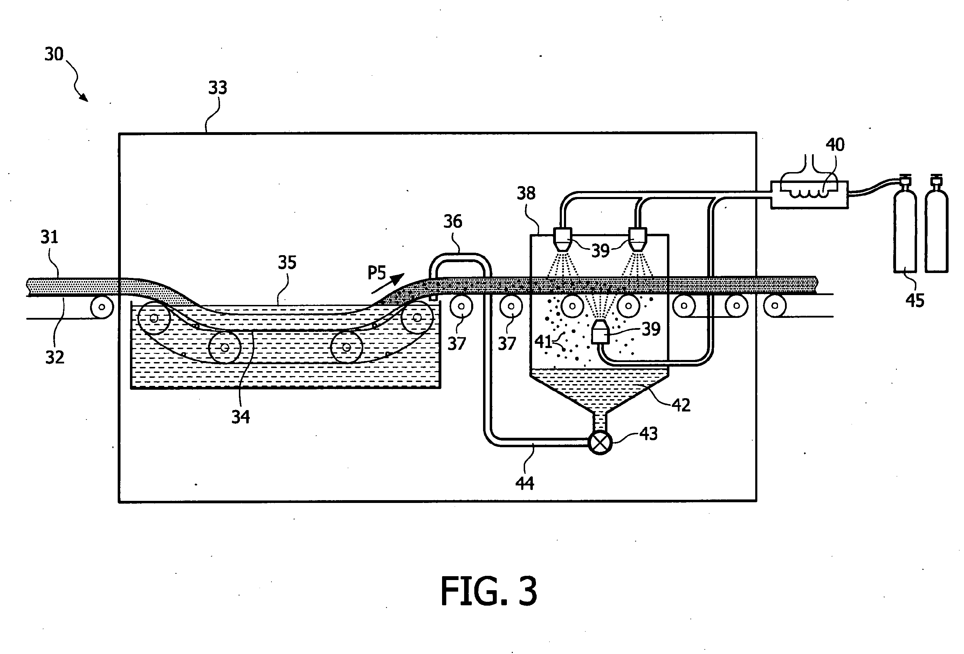

Figure 3 shows a device 30 to which a sausage strand 31 is supplied by a conveyor belt 32. Device 30 is enclosed by a housing 33 so that device 30 can function without disturbing influences from outside and without having an impact on the environment. The strand 31 carried into housing 33 and supported by an endless conveyor belt 34 enters a brining bath 35 (or, alternatively, a liquid smoke bath). The strand 31 leaves bath 35 as according to arrow P5 in a state in which the outside of strand 31 entrains adhering liquid 36. After being supported by a pair of rollers 37, the wet strand 31 enters a chamber 38 in which nozzles 39 blow a gas against strand 31 from different sides. The gas comes from a gas bottle 45 and is first brought to the desired temperature by a temperature regulator 40 before reaching nozzles 39. The liquid droplets 41 blown from the strand 31 by nozzles 39 fall into a reservoir 42 and are pumped back to bath 35 by a pump 43 and a return conduit 44. Finally, the dried strand 31 leaves housing 33 of device 30.

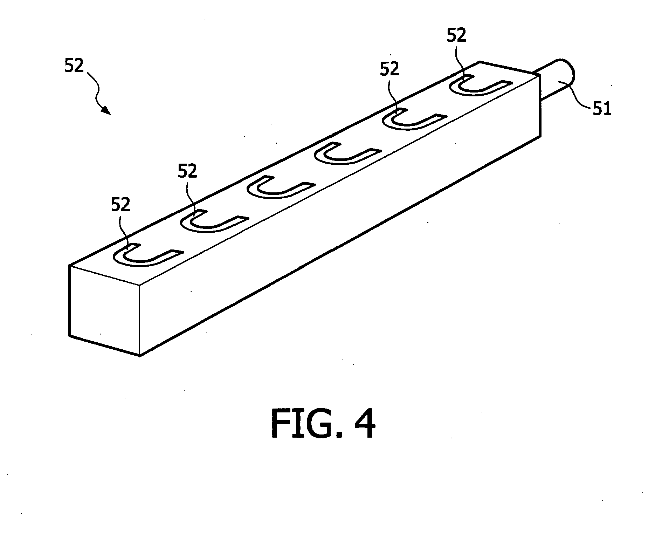

Figure 4 finally shows a tube 50 with a connection 51 for the supply of a gas. Recessed into the tube are slots 52, through which the gas supplied through connection 51 can once again escape. Using tube 50 a number of successive and mutually separated gas flows can be realized in simple manner. Gas flows generated in this manner are also referred to as gas or air knives.

## Claims

1. Device (1, 20, 30) for removing liquid (3, 24, 36) from the surface of a food product (2, 23, 31), comprising:
- transport means (4; 37) for displacing the food product (2, 23, 31) over a transport route, and
- supply means for gas (6, 7; 21, 22; 39; 50) placed adjacently of the transport route, which supply means for gas (6, 7; 21, 22; 39; 50) are adapted to generate a plurality of gas flows (11) crossing the transport route successively in the direction of transport,
**characterised in that** the transport means (4, 37) are adapted to supply a food strand (2, 23, 31), and the separate gas flows (11) are successively followed by a segment with a substantially stationary gas condition to blow the liquid (3, 24, 36) from the strand (2, 23, 31) in phases.

2. Device (1, 20, 30) as claimed in claim 1, **characterized in that** the supply means for gas (6, 7; 21, 22; 39; 50) are provided with a central gas supply (9, 10; 45; 51).

3. Device (1, 20, 30) as claimed in claim 1 or 2, **characterized in that** the device (1, 20, 30) is also provided with supply means (35, 42) for liquid (3, 24, 36) which are upstream of the supply means for gas (6, 7; 21, 22; 39; 50) and placed adjacently of the transport route and with which liquid (3, 24, 36) can be brought into contact with the food strand (2, 23, 31).

4. Device (1, 20, 30) as claimed in claim 3, **characterized in that** the device (1, 20, 30) is also provided with a housing (33) enclosing the supply means (35) for liquid (3, 24, 36), which housing (33) also comprises collecting means (26, 42) for collecting the removed liquid (12, 25, 41).

5. Device (1, 20, 30) as claimed in any of the foregoing claims, **characterized in that** the supply means for gas (6, 7; 21, 22; 39; 50) comprise heating means (40).

6. Device (1, 20, 30) as claimed in any of the foregoing claims, **characterized in that** the supply means for gas (6, 7; 21, 22; 39; 50) comprise cooling means (40).

7. Device (1, 20, 30) as claimed in any of the foregoing claims, **characterized in that** the supply means for gas (6, 7; 21, 22; 39; 50) comprise a hollow transport body for gas (6, 50) which is placed substantially parallel to the transport route and in which a plurality of outlet openings (7, 52) are arranged.

8. Method for removing liquid (3, 24, 36) from the surface of a food product (2, 23, 31) that is successively carried through a plurality of gas flows (11),
**characterised in that** the food product (2, 23, 31) is supplied as a food strand (2, 23, 31), and the liquid (3, 24, 36) is blown from the strand (2, 23, 31) in phases by successively moving the food strand (2, 23, 31)through a plurality of gas flows (11), which gas flows (11) are followed by segments with a substantially stationary gas condition.

9. Method as claimed in claim 8, **characterized in that** the food strand (2, 23, 31) undergoes varying flow conditions while being carried through the gas flows (11).

10. Method as claimed in claim 9, **characterized in that** the varying flow conditions are related to one or more of the following variables: speed, direction, gas composition and turbulence.

11. Method as claimed in any of the claims 8-10, **characterized in that** the flow rate of the gas flow (11) amounts to at least 5 metres per second.

## Patentansprüche

1. Vorrichtung (1, 20, 30) zum Entfernen von Flüssigkeit (3, 24, 36) von der Oberfläche eines Lebensmittelprodukts (2, 23, 31), wobei die Vorrichtung Folgendes umfasst:
- Transportmittel (4; 37) zum Verschieben des Lebensmittelprodukts (2, 23, 31) auf einem Transportweg, und
- Zufuhrmittel für Gas (6, 7; 21, 22; 39; 50) neben dem Transportweg, wobei die Zufuhrmittel für Gas (6, 7; 21, 22; 39; 50) angepasst sind, um eine Vielzahl von Gasströmen (11) zu erzeugen, die den Transportweg nacheinander in Transportrichtung durchfließen,
**dadurch gekennzeichnet, dass** die Transportmittel (4, 37) angepasst sind, um einen Lebensmittelstrang (2, 23, 31) zuzuführen, und den einzelnen Gasströmen (11) nacheinander ein Segment mit einem im Wesentlichen feststehenden Gaszustand folgt, um die Flüssigkeit (3, 24, 36) in Phasen von dem Strang (2, 23, 31) zu blasen.

2. Vorrichtung (1, 20, 30) nach Anspruch 1, **dadurch gekennzeichnet, dass** die Zufuhrmittel für Gas (6, 7; 21, 22; 39; 50) über eine zentrale Gaszufuhr (9, 10; 45; 51) verfügen.

3. Vorrichtung (1, 20, 30) nach Anspruch 1 oder 2, **dadurch gekennzeichnet, dass** die Vorrichtung (1, 20, 30) ferner über Zufuhrmittel (35, 42) für Flüssigkeit (3, 24, 36) verfügt, die sich vor den Zufuhrmitteln für Gas (6, 7; 21, 22; 39; 50) und neben dem Transportweg befinden und über die Flüssigkeit (3, 24, 26) in Kontakt mit dem Lebensmittelstrang (2, 23, 31) gebracht werden kann.

4. Vorrichtung (1, 20, 30) nach Anspruch 3, **dadurch gekennzeichnet, dass** die Vorrichtung (1, 20, 30) ferner über ein Gehäuse (33) verfügt, das die Zufuhrmittel (35) für Flüssigkeit (3, 24, 36) umschließt, wobei das Gehäuse (33) darüber hinaus Auffangmittel (26, 42) zum Auffangen der entfernten Flüssigkeit (12, 25, 41) umfasst.

5. Vorrichtung (1, 20, 30) nach einem der oben genannten Ansprüche, **dadurch gekennzeichnet, dass** die Zufuhrmittel für Gas (6, 7; 21, 22; 39; 50) Heizmittel (40) umfassen.

6. Vorrichtung (1, 20, 30) nach einem der oben genannten Ansprüche, **dadurch gekennzeichnet, dass** die Zufuhrmittel für Gas (6, 7; 21, 22; 39; 50) Kühlmittel (40) umfassen.

7. Vorrichtung (1, 20, 30) nach einem der oben genannten Ansprüche, **dadurch gekennzeichnet, dass** die Zufuhrmittel für Gas (6, 7; 21, 22; 39; 50) einen hohlen Transportkörper für Gas (6, 50) umfassen, der im Wesentlichen parallel zum Transportweg angebracht ist und in dem eine Vielzahl von Auslassöffnungen (7, 52) angeordnet sind.

8. Verfahren zum Entfernen von Flüssigkeit (3, 24, 36) von der Oberfläche eines Lebensmittelprodukts (2, 23, 31), das nacheinander durch eine Vielzahl von Gasströmen (11) geführt wird, **dadurch gekennzeichnet, dass** das Lebensmittelprodukt (2, 23, 31) als Lebensmittelstrang (2, 23, 31) zugeführt wird und die Flüssigkeit (3, 24, 36) in Phasen von dem Strang (2, 23, 31) geblasen wird, indem der Lebensmittelstrang (2, 23, 31) nacheinander durch eine Vielzahl von Gasströmen (11) geleitet wird, wobei den Gasströmen (11) Segmente mit einem im Wesentlichen feststehenden Gaszustand folgen.

9. Verfahren nach Anspruch 8, **dadurch gekennzeichnet, dass** der Lebensmittelstrang (2, 23, 31) unterschiedlichen Strömungsbedingungen ausgesetzt ist, während er durch die Gasströme (11) geführt wird.

10. Verfahren nach Anspruch 9, **dadurch gekennzeichnet, dass** die unterschiedlichen Strömungsbedingungen im Zusammenhang mit einer oder mehreren der folgenden Variablen stehen: Geschwindigkeit, Richtung, Zusammensetzung des Gases und Verwirbelung.

11. Verfahren nach einem der Ansprüche 8-10, **dadurch gekennzeichnet, dass** die Durchflussgeschwindigkeit des Gasstromes (11) mindestens 5 Meter pro Sekunde beträgt.

## Revendications

1. Dispositif (1, 20, 30) pour éliminer du liquide (3, 24, 36) de la surface d'un produit alimentaire (2, 23, 31), comprenant :
- des moyens de transport (4 ; 37) pour déplacer le produit alimentaire (2, 23, 31) sur un traj et de transport, et
- des moyens d'alimentation en gaz (6, 7 ; 21, 22 ; 39 ; 50) placés adjacents au trajet de transport, lesquels moyens d'alimentation en gaz (6, 7 ; 21, 22 ; 39 ; 50) sont adaptés pour produire une pluralité de flux gazeux (11) croisant le trajet de transport successivement dans le sens de transport,
**caractérisé en ce que** les moyens de transport (4, 37) sont adaptés pour fournir un boudin d'aliment (2, 23, 31) et **en ce que** les flux de gaz (11) distincts sont successivement suivis par un segment comportant un état gazeux sensiblement stationnaire pour souffler le liquide (3, 24, 36) du boudin (2, 23, 31) par phases.

2. Dispositifs (1, 20, 30) selon la revendication 1, **caractérisé en ce que** les moyens d'alimentation en gaz (6, 7 ; 21, 22 ; 39 ; 50) sont pourvus d'une alimentation centrale en gaz (9, 10 ; 45 ; 51).

3. Dispositif (1, 20, 30) selon la revendication 1 ou 2, **caractérisé en ce que** le dispositif (1, 20, 30) est aussi pourvu de moyens d'alimentation (35, 42) en liquide (3, 24, 36) qui sont en amont des moyens d'alimentation en gaz (6, 7 ; 21, 22 ; 39 ; 50) et placés adjacents au trajet de transport et avec lesquels du liquide (3, 24, 36) peut être mis en contact avec le boudin d'aliment (2, 23, 31).

4. Dispositif (1, 20, 30) selon la revendication 3, **caractérisé en ce que** le dispositif (1, 20, 30) est aussi pourvu d'un logement (33) renfermant les moyens d'alimentation (35) en liquide (3, 24, 36), lequel logement (33) comprend aussi des moyens collecteurs (26, 42) pour collecter le liquide (12, 25, 41) éliminé.

5. Dispositif (1, 20, 30) selon l'une quelconque des revendications précédentes, **caractérisé en ce que** les moyens d'alimentation en gaz (6, 7 ; 21, 22 ; 39 ; 50) comprennent des moyens de chauffage (40).

6. Dispositif (1, 20, 30) selon l'une quelconque des revendications précédentes, **caractérisé en ce que** les moyens d'alimentation en gaz (6, 7 ; 21, 22 ; 39 ; 50) comprennent des moyens de refroidissement (40).

7. Dispositif (1, 20, 30) selon l'une quelconque des revendications précédentes, **caractérisé en ce que** les moyens d'alimentation en gaz (6, 7 ; 21, 22 ; 39 ; 50) comprennent un corps creux de transport de gaz (6, 50) qui est placé sensiblement parallèle au trajet de transport et dans lequel une pluralité d'orifices de sortie (7, 52) sont agencés.

8. Procédé pour éliminer du liquide (3, 24, 36) de la surface d'un produit alimentaire (2, 23, 31) qui est successivement transporté à travers une pluralité de flux gazeux (11),
**caractérisé en ce que** le produit alimentaire (2, 23, 31) est fourni sous la forme d'un boudin d'aliment (2, 23, 31) et **en ce que** le liquide (3, 24, 36) est soufflé du boudin (2, 23, 31) par phases en faisant passer successivement le boudin d'aliment (2, 23, 31) à travers une pluralité de flux gazeux (11), lesquels flux gazeux (11) sont suivis par des segments comportant un état gazeux sensiblement stationnaire.

9. Procédé selon la revendication 8, **caractérisé en ce que** le boudin d'aliment (2, 23, 31) est soumis à des états d'écoulement variables pendant qu'il est transporté à travers les flux gazeux (11).

10. Procédé selon la revendication 9, **caractérisé en ce que** les états d'écoulement variables sont liées à l'une ou à plusieurs des variables suivantes : vitesse, direction, composition du gaz et turbulence.

11. Procédé selon l'une quelconque des revendications 810, **caractérisé en ce que** la vitesse d'écoulement du flux gazeux (11) se monte à au moins 5 mètres par seconde.
